# EUROPEAN PATENT APPLICATION

(11) **EP 2 200 220 A1**
(43) Date of publication of application: **23.06.2010**
(21) Application number: 08305994.9
(22) Date of filing: 22.12.2008
(51) Int. Cl.: H04L 12/18, H04L 29/06

(54) **Method and apparatus for reliable multicast streaming**

(71) Applicant: Thomson Licensing, 92443 Issy-les-Moulineaux Cedex (FR)
(72) Inventor: Chen, Ren Lei, 100085, BEIJING (CN); Zhang, Zhigang, 100085, BEIJING (CN); Ma, Xiao Jun, 100085, BEIJING (CN)
(74) Representative: Ruellan-Lemonnier, Brigitte

(57) **Abstract**

Methods and devices for network transmission in a network sytem, e.g. WLAN are provided. In the network system, there is a media server for multicasting video stream, a QoS server for obtaining important packets from the media server and reconstructing the obtained important packets into a QoS multicast stream. Then there is an AP for receiving and sending out the multicast video stream to mobile stations directly, and for receiving the QoS multicast stream, re-encapsulating and sending out the stream in multicast-over-unicast way.

## Description

### TECHNICAL FIELD

This invention relates to network transmission, especially to methods and apparatuses using multicast-over-unicast transmission scheme in a WLAN.

### BACKGROUND OF THE INVENTION

In wireless local area networks or WLANs based upon the IEEE 802.11 standards, which define intermediate devices such as access points(APs), bridges, routers and that provide access for mobile devices and to other networks, video transmissions--in particular real time transmissions-require broadcast/multicast transmissions. However, broadcast/multicast transmissions suffer from an inherent lack of an error correction mechanism. When a data packet is sent to a group of receivers (broadcast/multicast), it is extremely difficult, if not impossible for the transmitter to manage the retransmission protocol for each receiver.

Several mechanisms exist to overcome data packet loss, in particular Forward Error Correction (FEC), multicast automatic Repeat Request (ARQ) etc. All of these mechanisms, however, suffer from significant added complexity and limitations in certain networks. For example, some WLAN intermediate devices like Access Point (AP) or a bridge, where bridge and/or AP are used herein to include router and/or brouter or any device having equivalent functionality, have an inherent limit in the transmission rate for WLAN multicast data packets on the premise that multicast quality should be limited by the client, e.g., mobile terminal with the poorest reception. Another mechanism is to transmit all the multicast packets using the multicast-over-unicast scheme, which definitely causes a scalability problem" since because the bandwidth is limited, if all the multicast packets are transmitted using multicast-over-unicast scheme, then the number of terminals which can concurrently receive the multicast packets will be limited by the bandwidth..

### SUMMARY OF THE INVENTION

In a first aspect, a method for transmitting a packet stream containing a first set of packets in a network is provided. The method comprises steps of: sending said first set of packets to a plurality of receivers in multicast mode; and sending in unicast mode a second set of packets to at least one receiver among said plurality of receivers, wherein the second set of packets are a subset of the packets of the first set.

In detail, the first set of packets are capsulated into multicast packets with a multicast IP address and a corresponding multicast MAC address for a multicast group, and when sending the second set of packets to at least one receiver, the multicast MAC address contained therein is changed to the MAC address of the at least one receiver.

Further, the second set of packets are transmitted to a receiver in response to a request by the at least one receiver for joining the multicast group.

In addition, the second set of packets are selected as a function of importance for decoding the payload data of the first set of packets.

In above method said second set of packets are packets necessary for decoding I frames or base layer packets of a video stream.

In a second aspect, a method for receiving a packet stream containing a first set of packets in a network is described. The method comprises steps of: receiving the first set of packets in multicast mode; receiving the second set of packets in unicast mode, wherein the packets of the second set are a subset of the packets of the first set; and using packets from the second set to replace lost or uncorrectable packets from the first set of packets.

In the method of the second aspect, the first set of packets are capsulated into multicast packets whit a multicast IP address and a corresponding multicast MAC address for a multicast group, and the multicast MAC address contained in second set of packets is changed to a unicast MAC address when they are sent.

Further, the second aspect comprises steps of: joining a multicast group corresponding to the first set of packets; and for triggering the unicast transmission of the second set of packets, joining a second multicast group.

In addition, said subset of packets are packets necessary for decoding I frames or base layer packets of a video stream.

### BRIEF DESCRIPTION OF THE DRAWINGS

FIG.1 is a diagram illustrating an embodiment of present network system,
FIG.2a is an exemplary format of an Ethernet frame,
FIG.2b is an exemplary format of multicast packet,
FIG.2c is an exemplary format of the multicast packet of Fig.2b using multicast-over-unicast mechanism,
FIG.3 is a flow chart illustrating the process of present network sytem,
FIG.4 is a flow chart illustrating the process at a QoS server in the present network system,
FIG.5 is a flow chart illustrating the process at an AP with a QoS agent in the present network system, and
Fig.6 is a block diagram showing the structure of the network system.

### DETAILED DESCRIPTION OF AN EMBODIMENT OF THE INVENTION

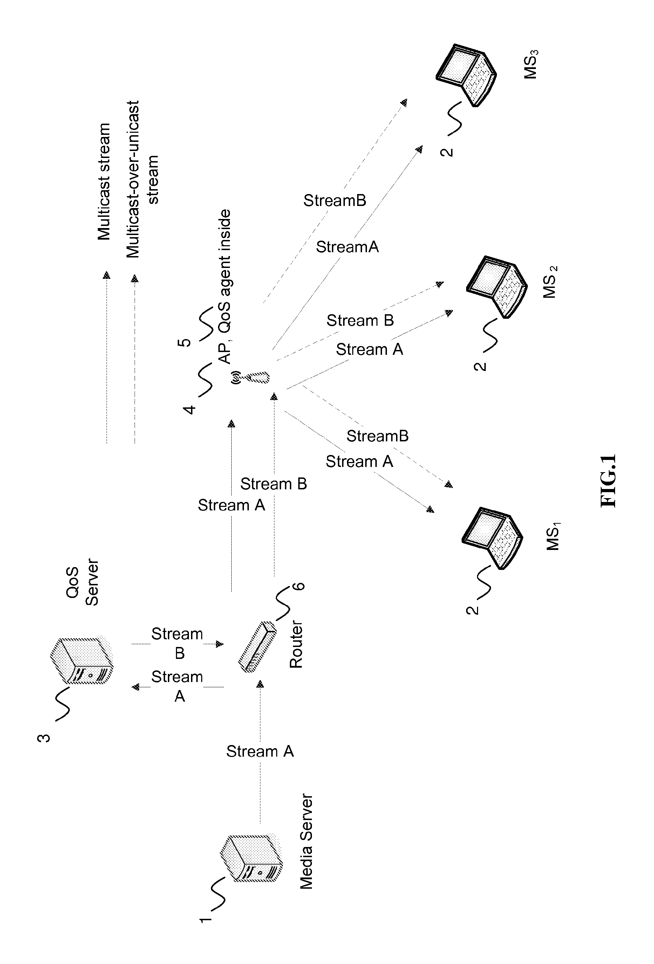

Fig.1 is a block diagram of a present network system including a wireless local area network (WLAN) according to an embodiment of the invention. As shown in Fig.1, there is a media server 1, multiple mobile stations 2, a QoS (Quality of Service) server 3, an AP (Access Point) 4 with a QoS agent 5 inside, and a router 6. The media server 1 and the QoS server 3 are within a LAN, e.g. IEEE802.3 LAN. The multiple MS 2 are in a WLAN, e.g. IEEE802.11 Wireless LAN and connected the LAN via the AP 4.

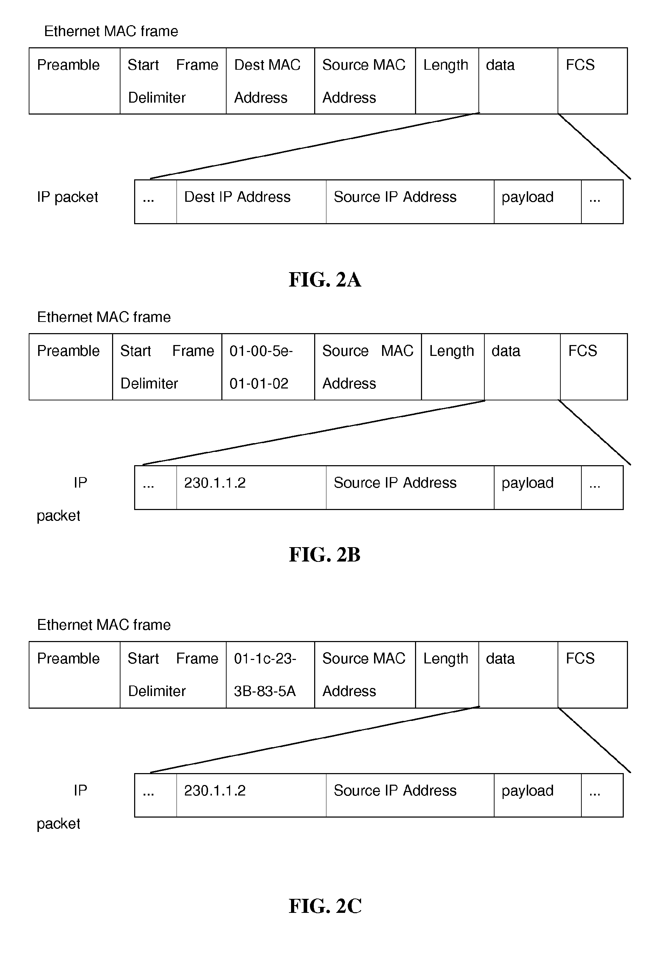

In the exemplary Fig.1, the multicast media stream is video stream A. At the media server 1 the video stream A is encapsulated first into IP packets and then the IP packets are encapsulated into Ethernet MAC frame format. Figure 2a illustrates an Ethernet MAC frame format according to IEEE802.3 protocol. Each IP packet (The field "data") added with an Ethernet MAC header is termed as an Ethernet MAC frame. In the IP packet, the field Dest IP Address is the destination IP address where the packet is routed to. And the Source IP Address shows where a packet from. In the multicast transmissions, the destination IP address is a multicast IP address. The field, Dest MAC Address, contained in the MAC header is used to identify the destination that the IP packet will be routed to. Note that for a general multicast packet, the contained Dest MAC Address is the multicast MAC address corresponding to the multicast IP address. So for the video stream A, the multicast group is A1, the multicast group Destination MAC address is A2 (01-00-5e-01-01-01), and the multicast group Destination IP address is A2' (e.g. 230.1.1.1). The Source MAC Address is the MAC address of the media server 1 and the Source IP Address is the IP address of the media server 1.

Prior to a multicast transmission, e.g. transmission of multicast video stream A, an appropriate announcement containing a session description is made by the media server 1. Standard session descriptions are generated using a Session Description Protocol (SDP), as defined in the Internet Engineering Task Force's draft RFC 2327. SDP is a simple ASCII text based protocol that is used to describe real time multimedia sessions and their related scheduling information. A SDP message conveys information about each media stream in the multicast session to allow the recipients to participate in the session. The media information contained in the SDP information includes the type of media (e.g. video, audio), the transport protocol (e.g. RTP, UDP, or IP), the format of the media (e.g. MPEG video), the multicast address for media, the transport port for media, etc. The multicast address for media are the destination address and destination port of the multicast stream. The address SDP information being sent is 224.2.2.2, and the UDP port is 4000. A host which wants to know the multicast session can join this special multicast session and receive the SDP information. For the multicast video stream A at the media server 1, the multicast address for the stream A is the multicast IP address A2' (230.1.1.1) and the corresponding MAC address A2 (01-00-5e-01-01-01).

By analyzing the SDP (Service Description Protocol) information, the QoS (Quality of Service) server 3 knows there is media content A to be multicast to multicast group A1 in the media server 1 and sends a request to the router 6 and shows the intention to join the multicast group A1. The request is sent for example, according to IGMP (Internet Group Management Protocol). The Internet Group Management Protocol (IGMP) is a communications protocol used to manage the membership of Internet Protocol multicast groups. IGMP is used by IP hosts (e.g. the QoS server 3, or the mobile station 2) and adjacent multicast routers to establish multicast group memberships. The QoS server 3 issues messages (JOIN) to the router 6 as an IGMP router for joining the multicast group A1 for the multicast video stream A. The router 6 responds the JOIN messages with a QUERY message to determine which group the QoS server is a member of. The QoS server feeds back the query with a membership report to inform that it wants to join the multicast group A1. The multicast video stream A can be received by the QoS server 3.

When the QoS server 3 catches the multicast video stream A, analyzes e.g. frame format, of every RTP/IP packet in the video stream, and reconstructs another multicast QoS stream B which includes only a few of important packets duplicated/copied from the video stream A. As shown in Fig. 2b, the reconstructed QoS stream B is multicast to a multicast group B1 with a multicast MAC address B2 (01-00-5e-01-01-02) and a corresponding multicast IP address B2' (230.1.1.2).

For example, the QoS server 3 analyzes the frame format of every RTP/IP packet in video stream A, duplicates those packets containing I frames (e.g. in a MPEG-2 encoded video stream) and stores them, because in MPEG-2 stream, B frames and P frames are generated with respect to the I frames. If a packet contains not only I frames but also other frames, e.g. B frames and/or P frames, the packet is still considered to be an important packet and stored at the QoS server 3. In another example, for a spatially scalable video stream, important packets can be base layer packets. That is because in a scalable encoded/decoded stream, the base layer relates to low resolution images, and from this base layer encodes/decodes at least one enhancement layer relating to high resolution images. The QoS server 3 also sends a request through the router 6 to the video server 1 to request it to update the SDP information for video stream A. The updated SDP information will indicate the destination multicast address A2 and A2' for video stream A and the destination multicast address B2 and B2' for the supplementary video stream B. The video stream A also contains the packets of the video stream. In addition, the QoS server 3 can be integrated into the video server 1 or be separated therefrom as shown herein.

When a mobile station 2 in the WLAN, for example MS₁ with the IP address being (10.11.72.64) and the MAC address being (00-1c-23-3B-83-5A), issues a request to the video server 1 for SDP information, it will receive SDP (Service Description Protocol) information related to the video stream A from the video server 1. By analyzing this SDP information, it learns that it can get the original video stream A by joining the multicast group A1 with multicast MAC address A2 (01-00-5e-01-01-01) and multicast IP address A2' (230.1.1.1), and get the supplementary QoS video stream B by joining the multicast group B1 with multicast MAC address B2 (01-00-5e-01-01-02) and multicast IP address B2' (230.1.1.2).

The QoS agent 5 at the wireless Access Point (AP) 4 blocks the packets of multicast stream A from the video server 1 and the supplementary QoS video stream B from the QoS server 3 until it gets a request from a mobile station 2 for the packets of stream A and/or B. The request sent by a mobile station 2 is an IGMP (Internet Multicast Protocol) JOIN message.

When the mobile station 2 joins the multicast group A1 or the multicast group B1 by sending a message, e.g. an IGMP JOIN message (Internet Group Management Protocol), to the router 6 via the AP 4, the multicast video stream A and/or video stream B will be forwarded to the mobile station 2 via the AP4.

The wireless Access Point (AP) 4 monitors IGMP messages sent from the mobile stations 2. Upon receipt of an IGMP Join request MS₁ to join multicast group A1 from a mobile station 2 such as, the AP 4 forwards the original multicast video stream A to MS₁ directly. If the video stream A has been sent before and the mobile station 2 has got the content, the mobile station 2 will not ask for the video stream again. If the AP 4 receives an IGMP request to join multicast group B1, the QoS agent 5 will encapsulate the IP multicast data packets in the multicast stream B into unicast IEEE 802.11 frames with a destination MAC address corresponding to the source address of the received IGMP packet, i.e., MS₁'s MAC address (00-1 c-23-3B-83-5A) in this case and send it out by using a multicast-over-unicast scheme. While the IP multicast data packets contain the unchanged IP multicast group address B2' (230.1.1.2), as shown in Fig.2c. Usually, each IP packet has an Ethernet MAC header called Ethernet MAC frame. A field 'Dest MAC Address' is contained in the MAC header, identifying the destination that the IP packet will be routed to. Note that for a general multicast packet, the contained Dest MAC Address is the multicast MAC address corresponding to the group address. In order to accomplish the multicast-over-unicast, the contained Dest MAC Address is changed to a specific host MAC address, whereas other fields remain the same as a general multicast packet. In the current example, the specific host MAC address is that of MS₁ (00-1c-23-3B-83-5A). By using the multicast-over-unicast transmission scheme, these most important packets can be reliably delivered to the mobile stations 2, while the original video stream A is transmitted to mobile stations 2 in multicast stream without MAC layer retransmission mechanism. Stream B can be sent to some or all of the mobile stations according to implementations.

A mobile station 2, e.g. MS₁ continuously receives the multicast stream A and the multicast-over-unicast stream in which the multicast stream B is encapsulated. It will store and analyze the received RTP packets from multicast stream A, and if it finds a RTP packet has been lost in the multicast stream A by counting the sequence number field in the RTP header, it will look for a RTP packet with the same sequence number in the received RTP packets queue of the multicast-over-unicast stream. If there is a RTP packet in received RTP packets queue of the multicast-over-unicast stream having the same sequence number as the lost RTP packet in the received RTP packets queue of the multicast stream A, it will copy or move the corresponding RTP packet from the queue in a buffer 8 of the multicast-over-unicast stream into the queue of the multicast stream A in buffer 7. Then the mobile station 2 will use these RTP packets in the queue of the multicast stream A to compose the frames for the video, decode the frames and play it.

During the process, the AP 4 will monitor the IGMP messages sent from the mobile stations 2 all the time, and it will stop transmitting the multicast-over-unicast stream B to a mobile station 2, once it detects that the mobile station 2 quits the multicast group B by issuing an IGMP leave message.

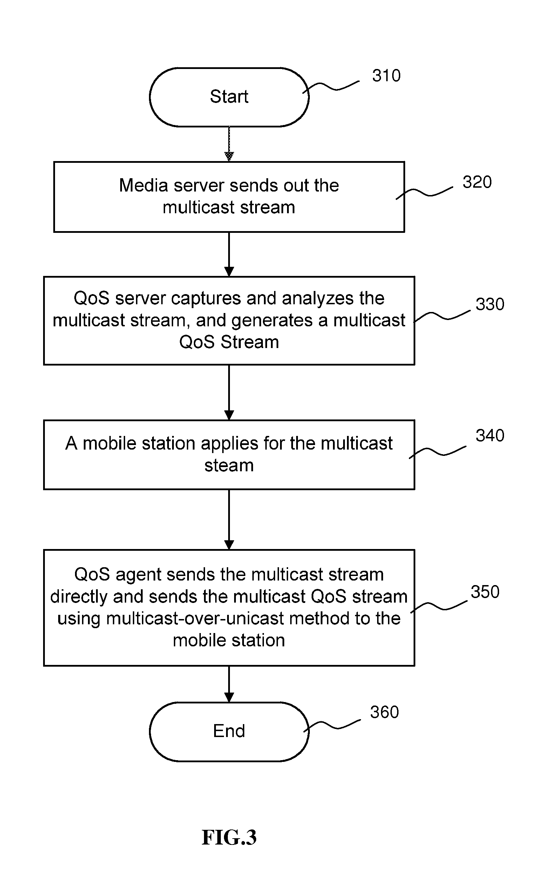

Fig.3 is a flow chart illustrating the process in the network according to the present embodiment. The process starts at step 310. At step 320, the media server 1 sends out the multicast stream A to a multicast group A1 with a multicast MAC address A2 and a multicast IP address A2'. At step 320, after analyzing e.g. SDP information related to the video stream A, the QoS server 3 joins the multicast group A1 and captures the multicast stream A. Then the QoS server 3 generates a multicast QoS stream B. This QoS stream B contains important packets copied/ duplicated from the multicast stream A. When a mobile station (user) 2 applies for the multicast stream A at step 340, by analyzing the SDP information of the stream A, it knows that it can get the original stream A by joining the multicast group A1 with multicast MAC address A2 (01-00-5e-01-01-01) and multicast IP address A2' (230.1.1.1) and get the supplementary QoS video stream B by joining the multicast group B1 with multicast MAC address B2 (01-00-5e-01-01-02) and multicast IP address B2'(230.1.1.2). At step 350, the AP 3 with the QoS agent 4 joins the multicast group B1, encapsulates the QoS video stream B into unicast IEEE 802.11 frames, and sends them by using the multicast-over-unicast method to the mobile stations 2. The process ends at step 360. So when transmitting the QoS video stream B from the AP 3 to the mobile station 2, a unicast session is established to transmit the multicast packets contained in the QoS video stream B.

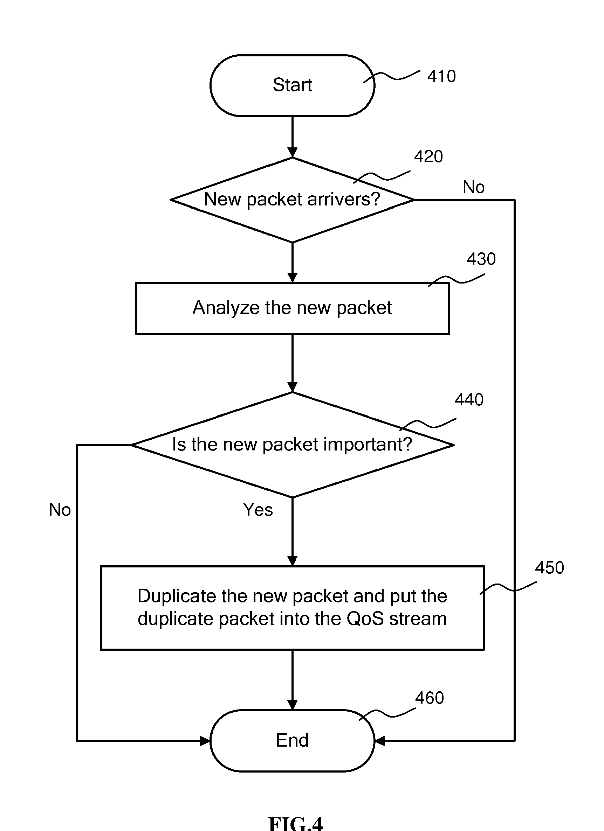

Fig.4 is a flow chart illustrating the detailed process at the QoS server 3. The process starts at step 410. At step 420, it is determined whether a new packet from the video server 1 arrives. If it is "yes", the process goes to step 430, where the QoS server 3 analyzes the received new packet to determine whether the received new packet is an important one or not at step 440. The important packet is determined in an example as a packet containing I frame related data. If the received new packet is an important packet, at step 450, a copy of the received new packet is inserted into a multicast-over-unicast stream and transmitted to the mobile stations.

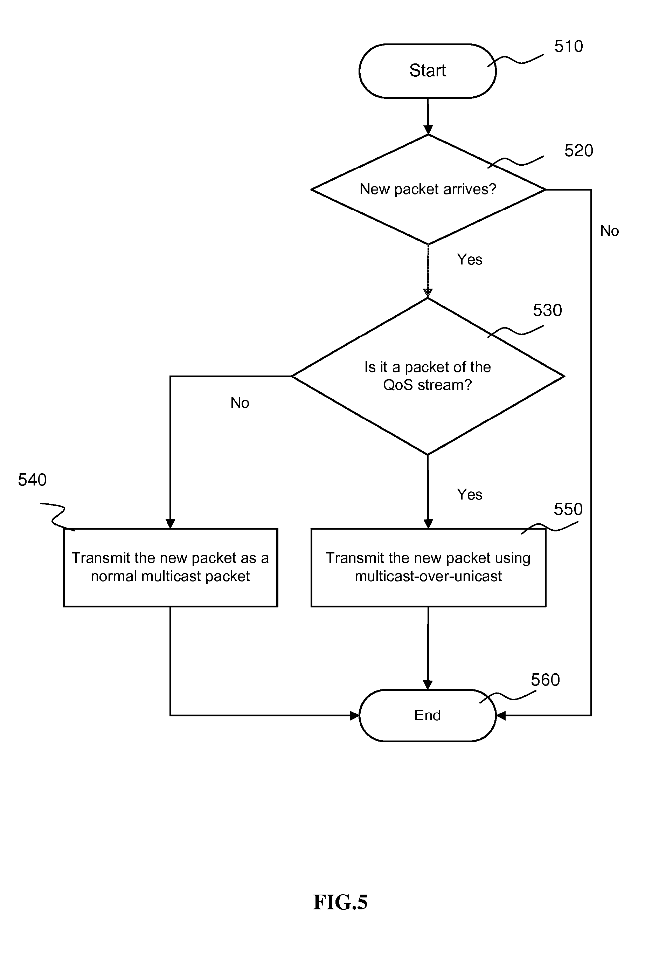

Fig.5 is a flow chart illustrating the detailed processes at the AP 4. At step 510 the process starts. Then at step 520, it is determined whether a new packet arrives. If the determination is "yes", the process goes to step 530 where it further determines whether the new packet is a packet from the QoS stream according to its multicast destination address B1 and B1'. If it is, the new packet is transmitted at step 550 by using the multicast-over-unicast method. Then the process ends at step 560. If the determination at step 530 is "no", which means by analyzing the destination address contained in the packet, the AP learns that the packet is for multicast group A with multicast MAC address A1 and IP address A1', and the packet isn't a QoS stream packet, the process goes to step 540 to transmit the new packet as a normal multicast packet. For same media content (payload), when it is contained in the QoS stream and the original media stream, since the multicast addresses are different, it is transmitted to the mobile station 2 in multicast-over-unicast scheme and direct multicast scheme respectively. And then the process ends at step 560.

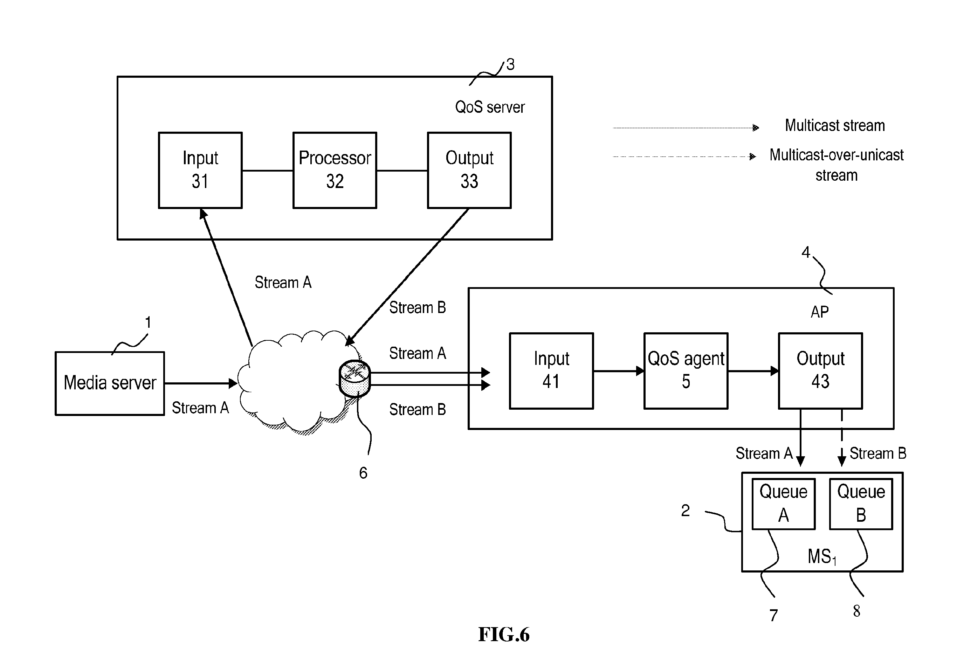

Fig.6 is a block diagram showing the structure of the network and the devices in the network. To accomplish above processes, as shown in Fig. 6, the QoS server 3 includes an input 31 for receiving multicast packets from the media server 1 and a processor 32 for analyzing and determining whether the received multicast packets are important packets or not. If the received multicast packets are important ones, e.g. I frame related packets, the processor 32 will duplicate and re-construct these important packets into new multicast packets. Then the re-constructed important packets are transmitted to the AP 4 via an output 33.

Accordingly, at the AP 4, there is an input 41 for receiving packets from the QoS server 3 and the media server 1. There is also a QoS agent 5 for analyzing whether a received packet is a packet from the media server 1 or a packet of the QoS stream from the QoS server 3. If the received packet is a packet from the media server 1, it will be sent via output 43 to the mobile stations 2 in multicast way directly. And if the received packet is a packet of the QoS stream from the QoS server 3, it will be sent via output 43 to the mobile stations 2 in multicast-over-unicast mode.

In above description, though the apparatus of the media server 1 and the QoS server 3 are put separately, they can be put together too. In addition, although the above processes of the whole system or at a specific device are illustrated in sequence, it shouldn't be construed as a limitation to the present principle, the sequences can be changed.

A number of implementations have been described. Nevertheless, it will be understood that various modifications may be made. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application and are within the scope of the following claims.

## Claims

1. Method for transmitting a packet stream containing a first set of packets in a network **characterized by** the steps of:
- sending said first set of packets to a plurality of receivers in multicast mode; and
- sending in unicast mode a second set of packets to at least one receiver among said plurality of receivers, wherein the second set of packets are a subset of the packets of the first set.

2. Method according to claim 1, wherein the first set of packets are encapsulated in multicast packets with a multicast IP address and a corresponding multicast MAC address for a multicast group, and when sending the second set of packets to at least one receiver, the multicast MAC address contained therein is changed to the MAC address of the at least one receiver.

3. Method according to claim 1 or 2, wherein the second set of packets are transmitted to a receiver in response to a request by the at least one receiver for joining the multicast group.

4. Method according to one of the claims 3, wherein of the second set of packets are selected as a function of importance for decoding the payload data of the first set of packets.

5. Method according to claim 4, wherein said second set of packets are packets necessary for decoding I frames or base layer packets of a video stream.

6. Method for receiving a packet stream containing a first set of packets in a network, **characterized by** the steps of:
- receiving the first set of packets in multicast mode;
- receiving the second set of packets in unicast mode, wherein the packets of the second set are a subset of the packets of the first set;
- using packets from the second set to replace lost or uncorrectable packets from the first set of packets.

7. Method according to claim 6, wherein the first set of packets are encapsulated in multicast packets with a multicast IP address and a corresponding multicast MAC address for a multicast group, and the multicast MAC address contained in second set of packets is changed to a unicast MAC address when they are sent.

8. Method according to claim 6 or 7, further comprising the steps of:
- joining a multicast group corresponding to the first set of packets;
- for triggering the unicast transmission of the second set of packets, joining a second multicast group.

9. Method according to claim 6 or 7, wherein said subset of packets are packets necessary for decoding I frames or base layer packets of a video stream.
